**Europäisches Patentamt**

**European Patent Office**

**Office européen des brevets**

(19)

(11) Veröffentlichungsnummer : **0 122 621**
**B1**

(12) # EUROPÄISCHE PATENTSCHRIFT

(45) Veröffentlichungstag der Patentschrift :
08.07.87

(21) Anmeldenummer : 84104197.3

(22) Anmeldetag : 13.04.84

(51) Int. Cl.⁴ : **B 65 G 53/08**

(54) **Pneumatische Schüttgut-Entladevorrichtung mit Zellenradschleuse, insbesondere für Kippfahrzeuge.**

(30) Priorität : 14.04.83 DE 3313516

(43) Veröffentlichungstag der Anmeldung :
24.10.84 Patentblatt 84/43

(45) Bekanntmachung des Hinweises auf die Patenterteilung : 08.07.87 Patentblatt 87/28

(84) Benannte Vertragsstaaten :
AT BE CH DE FR GB LI NL

(56) Entgegenhaltungen :
DE-A- 1 556 139
DE-A- 2 336 975
DE-B- 1 195 670
US-A- 2 757 049

(73) Patentinhaber : **Krein, Walter**
**Waldstrasse 19**
**D-8903 Bobingen (DE)**

(72) Erfinder : **Krein, Walter**
**Waldstrasse 19**
**D-8903 Bobingen (DE)**

(74) Vertreter : **Patentanwälte Dipl.-Ing. R. Holzer Dipl.-Ing.**
**(FH) W. Gallo**
**Philippine-Welser-Strasse 14**
**D-8900 Augsburg (DE)**

## Beschreibung

Die Erfindung betrifft eine pneumatische Schüttgut-Entladevorrichtung mit Zellenradschleuse nach dem Oberbegriff des Anspruchs 1.

Schüttgüter aller Art, von mehligem Material über Körner- und Granulatmaterial bis zu hartkörnigem Material, werden häufig von Speditionen mit normalen Kipplastwagen transportiert. Dabei stellt sich beim Abladen das Problem, daß das Schüttgut möglichst direkt vom Lastwagen in Silos oder andere Behälter befördert werden sollte. In der Regel sind aber Fahrzeuge der in Rede stehenden Art nicht mit einer bordeigenen Entladevorrichtung ausgestattet, sondern müssen mit Hilfe einer externen Entladevorrichtung oder durch Auskippen in eine Förderanlage oder einen Zwischenbehälter entladen werden.

Es ist daher wünschenswert, häufig für den Transport von Schüttgütern verwendete Kipplastwagen mit einer bordeigenen Entladevorrichtung auszustatten. Dabei ist aber zu berücksichtigen, daß diese Entladevorrichtung nicht übermäßig sperrig und schwer sein und insbesondere die Verwendung des Fahrzeugs zum Transport anderer Waren, beispielsweise Palettenwaren, nicht behindern darf. Weiter ist dem Umstand Rechnung zu tragen, daß eine solche bordeigene Entladevorrichtung in der Lage sein muß, verschiedenartige Schüttgüter, nämlich, wie oben schon erwähnt, mehlige bis körnige oder hartkörnige Güter, die je nach Bedarf transportiert werden, zu entladen.

Eine pneumatische Schüttgut-Entladevorrichtung mit Zellenradschleuse der eingangs genannten Gattung ist aus der DE-B-1 195 670 bekannt. Bei dieser bekannten Vorrichtung läuft ein Zellenrad mit durch achsparallel verlaufenden Radialflügeln gebildeten Zellen in einem zylindrischen Gehäuse um, das an seiner Unterseite einen radial in eine Druckluftförderleitung ausmündenden Schleusenauslaß aufweist, durch welchen das Gut radial aus der betreffenden Zelle des Zellenrads heraus in die Druckluftförderleitung fällt. Koaxial mit dem Zellenrad ist auf einer gemeinsamen Welle eine Förderschnecke angeordnet, welche das Gut axial zur Stirnseite des Zellenrades und folglich stirnseitig in die Zellen des Zellenrades fördert. Dabei ist die schneckenseitige Stirnseite des Zellenrades durch einen etwa halbkreisförmigen Verschlußkörper abgedichtet, der im Axialschnitt die Form einer das Gut in den oberen Zellenradbereich leitenden Rampe hat.

Für den vorgesehenen Einsatz als bordeigene Entladevorrichtung für Kippfahrzeuge hätte die bekannte, zum Austragen von Staub aus Abscheidern konzipierte Vorrichtung aber den Nachteil, daß der radial nach unten führende Schleusenauslaß mit der daran anzuordnenden Druckluftförderleitung eine ziemlich große Bauhöhe ergäbe, was für eine Anordnung an Kippfahrzeugen, beispielsweise im Bereich der Unterkante der hinteren Ladeklappe, einerseits im Hinblick auf das Kippen der Ladefläche und andererseits im Hinblick auf die Betätigung der hinteren Ladeklappe zum Be- und Entladen anderer Güter, beispielsweise Palettenware, sowie auf die Anordnung einer Anhängerkupplung ungünstig wäre.

Außerdem haben praktische Versuche mit ähnlichen Vorrichtungen aufgezeigt, daß sich speziell im Hinblick auf die Möglichkeit der Entladung verschiedenartiger Schüttgüter Schwierigkeiten aus der Umlaufbewegung des Zellenrades relativ zu dem Verschlußkörper ergeben, der einen Teil der schneckenseitigen Zellenradstirnseite abdeckt und zur Abdichtung gegen die Druckluftförderleitung notwendig ist, um ein Ausblasen von Druckluft durch die Schleuse in das zu entladende Schüttgut zu vermeiden. Während der Betrieb mit mehligem Schüttgut relativ problemlos verläuft, geraten beim Betrieb mit körnigem Schüttgut ständig Schüttgutkörner zwischen die Stirnkanten der umlaufenden, die einzelnen Zellen des Zellenrades voneinander trennenden Zellenradflügel und die feststehende Kante des nicht umlaufenden Verschlußkörpers, die wie eine Schere wirken. Diese ständig auftretende Scherung von Körnern verursacht einen hohen Drehwiderstand des Zellenrades und erfordert daher relativ viel Energie zu dessen Antrieb, und besonders bei hartkörnigem Schüttgut besteht die Gefahr, daß Körner in den Spalt zwischen Zellenradstirnseite und Verschlußkörper hineingezogen werden, dort die Oberflächen beschädigen und sich möglicherweise festfressen, was schließlich ein Blockieren des Zellenrades zur Folge haben kann. Diese Gefahr tritt insbesondere bei Schüttgütern, wie beispielsweise Steinsalz, auf, bei dem nicht nur die Salzkörner eine ziemlich große Härte haben, sondern außerdem noch mit einem geringen Anteil an sehr hartem Naturgestin vermischt sind.

Der Erfindung liegt die Aufgabe zugrunde, eine pneumatische Schüttgut-Entladevorrichtung der eingangs genannten Gattung, insbesondere für einen Einsatz als bordeigene Entladevorrichtung für Kippfahrzeuge auszubilden, wobei als wesentliche Erfordernisse eine kompakte Bauform und die Fähigkeit zum Entladen verschiedenartiger, nämlich mehliger bis weich- und hartkörniger Schüttgüter zu berücksichtigen sind.

Diese Aufgabe wird bei einer Vorrichtung der in Rede stehenden Gattung durch die im kennzeichnenden Teil des Anspruchs 1 angegebene Anordnung gelöst.

Die Ausbildung der Kammerwände des Zellenrads als Schneckengänge bewirkt, daß das Zellenrad nicht nur als passiv von der Förderschnecke beladenes Schleusenorgan, sondern selbst als aktiv förderndes Förderorgan arbeitet, wodurch der Füllungsgrad der Zellenradkammern beträchtlich verbessert, ein Materialstau im Bereich zwischen Förderschnecke und Zellenrad vermieden und ein besserer Wirkungsgrad der Entladevorrichtung erreicht wird.

Das Einblasen der Druckluft unmittelbar in die Kammern des Zellenrads, und zwar axial, also in der ursprünglichen Förderrichtung, bringt den Vorteil, daß das bereits in axialer Bewegung befindliche Fördergut durch die Druckluft weiter beschleunigt und ohne mehrmalige Richtungsänderungsverluste abgefördert und gleichzeitig die betreffende Zellenradkammer vollständig entleert wird. Das Einblasen der Druckluft unmittelbar axial in die Zellenkammern eines Zellenrades ist an sich bereits bekannt (z. B. die DE-A-1 556 139), jedoch nicht im Zusammenhang mit einer kontinuierlich fortschreitenden Fördergutbewegung.

Die messerartige Ausbildung der entgegen der Drehrichtung weisenden Verschlußkörperkante bewirkt bei der erfindungsgemäßen Vorrichtung, daß die meisten nicht vollständig in das Schleusenrad eintretenden Schüttgutkörner ohne Abscheren über die Verschlußkörperkante abgelenkt werden und der relativ kleine, doch einer Scherung unterzogene Anteil von Schüttgutkörnern mit relativ kleinem Energieaufwand glatt abgeschert wird.

In ihrem Zusammenwirken ergeben die Merkmale der erfindungsgemäßen Entladevorrichtung einen Betrieb mit im Verhältnis zur Größe der Vorrichtung hohem Wirkungsgrad, also großem Förderdurchsatz bei relativ geringem Energieaufwand und bei weitgehender Unempfindlichkeit gegen verschiedenartige Schüttgüter. Dies ermöglicht eine sehr kompakte Ausbildung der erfindungsgemäßen Vorrichtung und ihre Unterbringung im Bereich des unteren Teils der Hinterbordwand eines Kippfahrzeugs oder in einer Bodenmulde im Bereich der Hinterbordwand.

Praktische Versuche haben nachgewiesen, daß sich die erfindungsgemäße Vorrichtung für körniges Schüttgut, beispielsweise Getreidekörner, und für extrem hartkörniges Schüttgut, wie beispielsweise naturgebrochenes Steinsalz mit Gesteinsbeimengungen, ebenso eignet wie für mehliges Schüttgut, wie beispielsweise Zement.

Vorteilhafte Ausgestaltungen der erfindungsgemäßen Vorrichtung sind Gegenstand der Ansprüche 2 bis 14.

Die Anordnung nach Anspruch 2 mit dem am Zellenrad angeordneten, den Förderstrom radial zum Schleusenauslaß umlenkenden Leitkörper ermöglicht eine verlustarme Umlenkung des Druckluft/Schüttgut-Förderstromes und ermöglicht einen Abgang der Förderleitung nach oben.

Die nach Anspruch 3 vorgesehene, nach oben aus dem Gehäuse ausmündende Restluftausblaseöffnung, durch welche die von der Druckluftbeaufschlagung beim Ausblasen der betreffenden Schleusenkammer noch vorhandene Überdruckluft vor der Wiederbefüllung mit Schüttgut ausgeblasen wird, bewirkt ein Ausblasen dieser Restluft in das oberhalb des Schleusengehäuses befindliche Schüttgut, das von der Förderschnecke nicht direkt erfaßt werden kann, wodurch der Verbleib eines Restmaterialkegels über dem Schleusengehäuse vermieden und dieses Material zur Förderschnecke hin weggeblasen wird.

Die in den Ansprüchen 4 bis 6 vorgesehene spezielle Ausbildung der Förderschnecke hat die Wirkung, daß die Förderschnecke einen über ihre Länge zum Zellenrad hin größer werdenden Förderquerschnitt aufweist und folglich über ihre ganze Schneckenlänge, also nicht nur von ihrem von der Zellenradschleuse abgewandten Schneckenende her, Material aufnimmt.

Die Unterbringung des Antriebsmotors in der hohlen Schneckenwelle gemäß Anspruch 8 ermöglicht eine kompakte Ausbildung mit einer sich im wesentlichen über die gesamte Länge der Hinterbordwand eines Kippfahrzeugs erstreckenden Förderschnecke ohne Toträume und ohne überstehenden Motor.

Die Ausbildung des Zellenrads nach Anspruch 10 mit einem damit umlaufenden Rohrmantel bringt den Vorteil, daß keine Schüttgutteilchen zwischen den umlaufenden Kammerwänden des Zellenrads und dem feststehenden Gehäuse zermahlen werden oder Reibung verursachen, und der am Verschlußkörper gemäß Anspruch 11 angeformte Abdeckring verhindert, daß von der Förderschnecke zugefördertes Material in den Spalt zwischen Rohrmantel und Gehäuse eindringt.

Besonders vorteilhaft ist die in Anspruch 12 angegebene Doppelanordnung, bei welcher die Doppelzellenradschleuse etwa in der Mitte der Bordwand angeordnet ist und die beiden Förderschnecken, die als auf der gleichen Welle angeordnete links- bzw. rechtsgängige Schnecken gleichen Drehsinn haben, sich beiderseits der Doppelzellenradschleuse jeweils bis zum Ende der Bordwand erstrecken.

Besonders zweckmäßig ist bei Verwendung der erfindungsgemäßen Entladevorrichtung als bordeigene Entladevorrichtung von Kipplastwagen deren Einbau in bzw. Ausbildung als Bestandteil einer austauschbaren Hinterbordwand gemäß Anspruch 13, so daß je nach Bedarf der Lastwagen mit einer normalen Hinterbordwand oder für den Schüttgütertransport mit einer Hinterbordwand mit integrierter Entladevorrichtung ausgestattet werden kann. Dadurch ist es möglich, bei einem größeren Fahrzeugpark eine solche Entladevorrichtung jeweils nur bei den gerade für den Schüttgütertransport eingesetzten Fahrzeugen zu verwenden.

Bei Verwendung der erfindungsgemäßen Entladevorrichtung als Schiffsentladevorrichtung ist diese im Kielbereich untergebracht und kann somit gemäß Anspruch 14 vorteilhaft auch als Lenzpumpe bzw. Hilfslenzpumpe betrieben werden.

Einige Ausführungsbeispiele der Erfindung werden nachstehend mit Bezug auf die anliegenden Zeichnungen mehr im einzelnen beschrieben, in welchen zeigen :

Figur 1 in schematischer Darstellung eine in die Hinterbordwand eines Lastkraftwagens eingebaute Entladevorrichtung nach der Erfindung,

Figur 2 einen Querschnitt in der Ebene II-II in

Fig. 1,

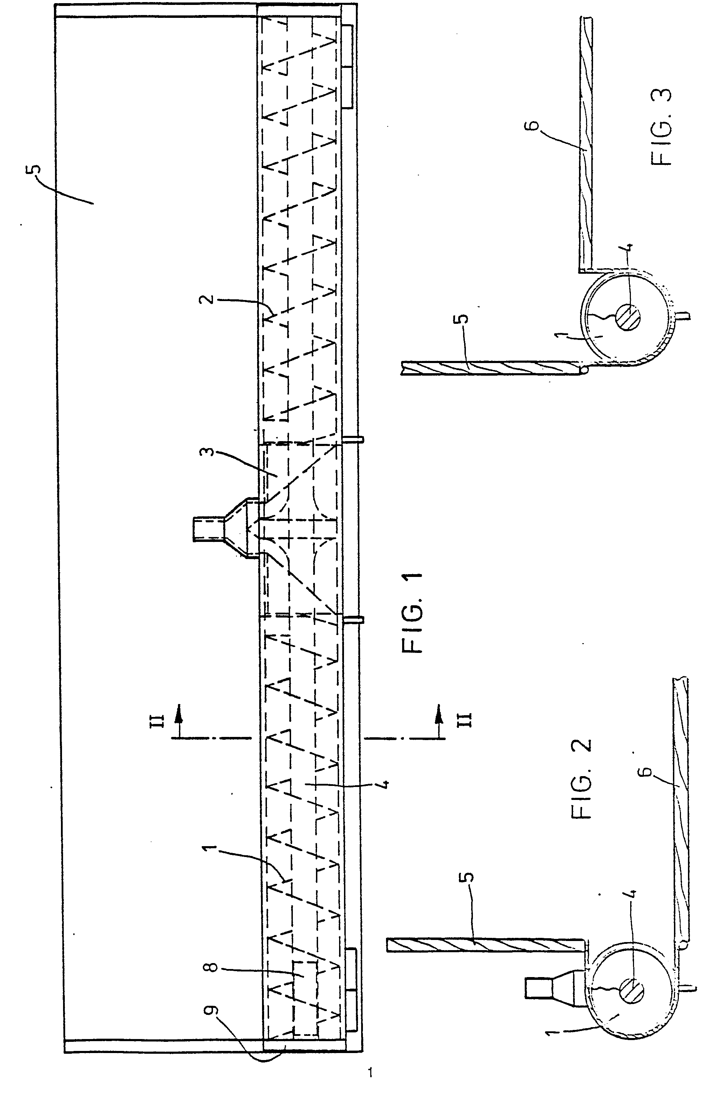

Figur 3 einen Querschnitt ähnlich Fig. 2 bei in einer Bodenmulde eingebauter Entladevorrichtung,

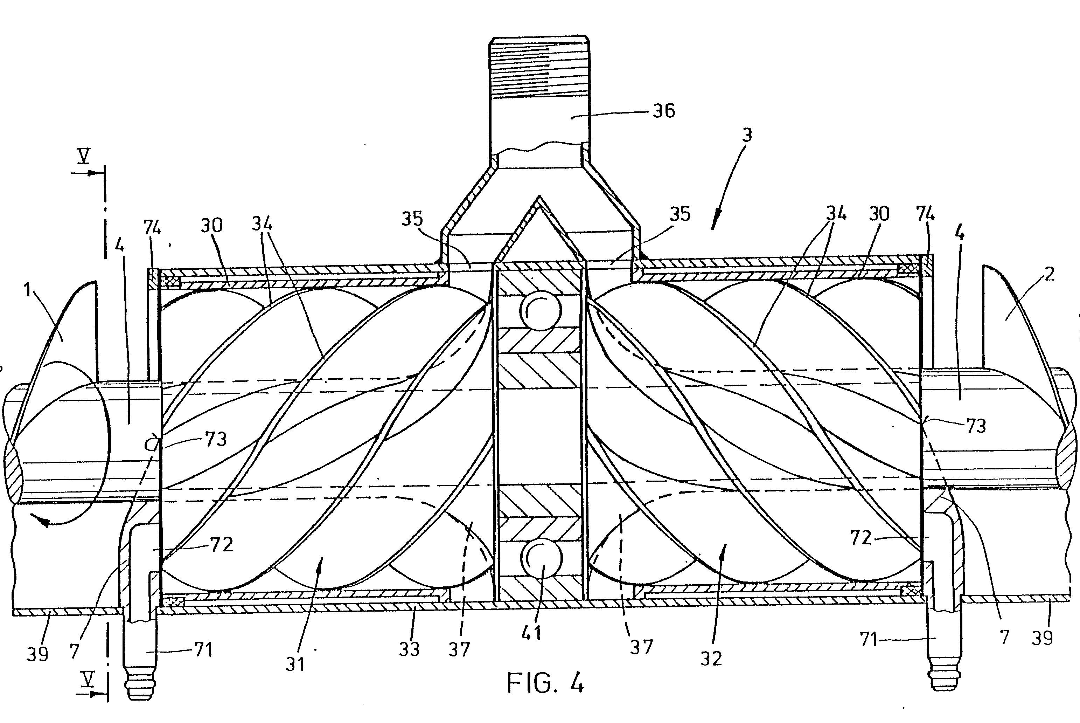

Figur 4 die erfindungsgemäße Entladevorrichtung in näheren Einzelheiten,

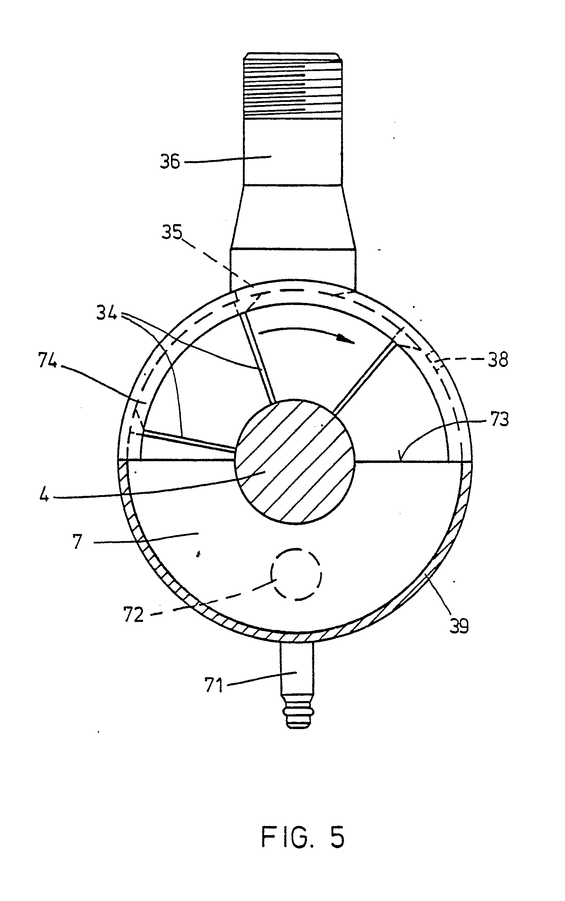

Figur 5 einen Querschnitt in der Ebene V-V in Fig. 4, und

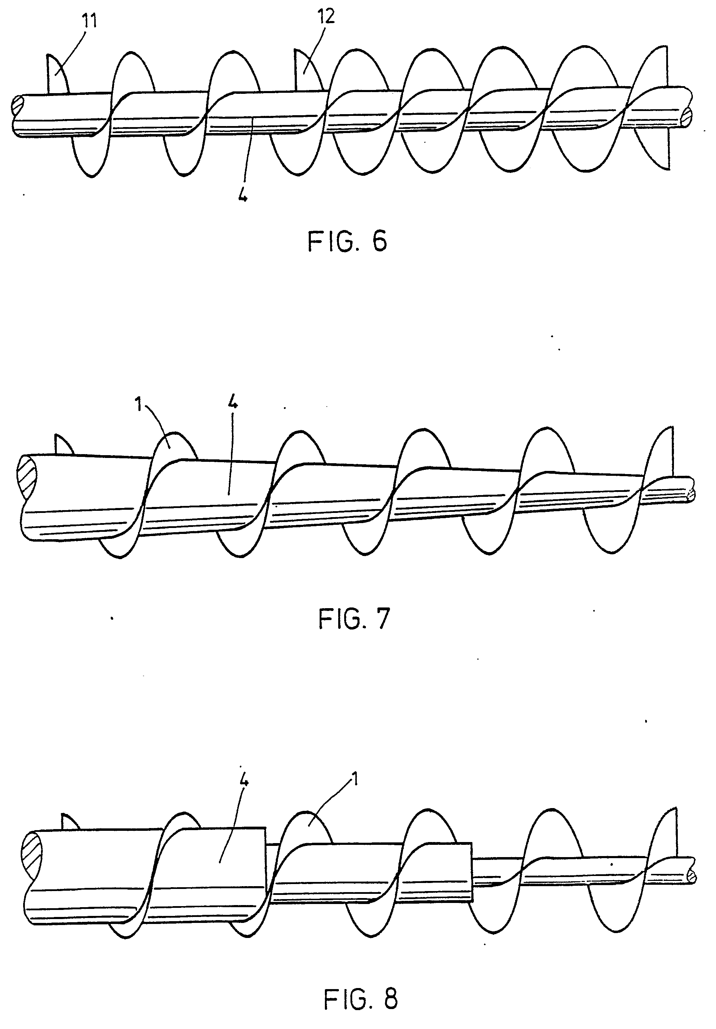

die Figuren 6 bis 8 jeweils in schematischer Darstellung abgewandelte Ausführungsformen der Förderschecke.

Fig. 1 zeigt schematisch eine bevorzugte Ausführungsform einer pneumatischen Entladevorrichtung nach der Erfindung, die in die Hinterbordwand eines Kipplastwagens eingebaut und als Doppelanordnung mit einer mittig angeordneten Zellenradschleuse und zwei beiderseits davon sich entlang der Hinterbordwand erstreckenden Förderschnecken.

Die beiden Förderschnecken 1 und 2 und das Doppelzellenrad 3 der Doppelschleuse sind auf einer gemeinsamen, motorisch angetriebenen Welle 4 angeordnet und laufen gemeinsam um. Dabei ist die eine Förderschnecke 1 als linksgängige Schnecke und die andere Förderschnecke 2 als rechtsgängige Schnecke ausgebildet, so daß die beiden gleichsinnig umlaufenden Förderschnecken beide zur Doppelzellenradschleuse hin fördern.

Fig. 2 zeigt im Querschnitt die Art des Einbaus der Entladevorrichtung in die Hinterbordwand 5. Anstatt in die Hinterbordwand kann die Entladevorrichtung aber auch in gleicher Weise in eine Bodenmulde am hinteren Ende der Ladeplattform 6 eingebaut werden, wie Fig. 3 zeigt.

Die Doppelzellenradschleuse ist in Fig. 4 mehr im einzelnen dargestellt.

Das Doppelzellenrad 3 der Doppelzellenradschleuse besteht aus zwei axial hintereinander auf der gemeinsamen Welle 4 angeordneten Zellenradabschnitte 31 und 32 auf, die jeweils einen damit zusammen umlaufenden Rohrmantel 30 aufweisen und von einem gemeinsamen Gehäuse 33 umschlossen sind, in welchem die gemeinsame Welle 4 zwischen den beiden Zellenradabschnitten in einem Lager 41 gelagert ist. Außerdem ist die Welle 4 in nicht dargestellten Lagern an den jeweils von der Zellenradschleuse entfernten Schneckenende gelagert.

Die radialen Kammerwände 34 der beiden Zellenradabschnitte 31 und 32 sind jeweils ihrerseits in Form von Schneckengängen ausgebildet, die als Verlängerung der Förderschnecken 1 und 2 wirken und das zu den Zellenradstirnseiten zugeförderte Material aktiv weiterbefördern. Den beiden Zellenradabschnitten 31 und 32 ist jeweils eine radial nach oben ausmündende Schleusenauslaß 35 des Gehäuses 33 zugeordnet, die beide in einen gemeinsamen Auslaßstutzen 36 münden, an welche eine nicht dargestellte Druckluftförderleitung anzuschließen ist.

Beide Zellenradabschnitte 31 und 32 weisen jeweils an ihrem von der zugehörigen Förderschnecke 1 bzw. 2 abgewandten Ende einen Leitkörper 37 auf, der mit seiner konkav gewölbten Leitfläche den Förderstrom aus der ursprünglichen, im wesentlichen axialen Förderrichtung in eine etwa radiale Richtung zu der betreffenden Schleusenauslaß 35 hin umlenkt.

Die der zugehörigen Förderschnecke 1 bzw. 2 zugewandte Stirnseite jedes Zellenradabschnittes 31 bzw. 32 ist von einem in der Stirnansicht etwa halbkreisförmigen Verschlußkörper 7 abgedeckt, dessen dem betreffenden Zellenradabschnitt zugewandte Stirnfläche dichtend mit den Stirnkanten der Kammerwände dieses Zellenradabschnitts zusammenwirkt. Ein einteilig mit dem Verschlußkörper ausgebildeter Abdeckring 74 deckt den Spalt zwischen dem Rohrmantel 30 und dem Gehäuse 33 ab, damit kein Schüttgut eindringen kann. Außerdem können nach Bedarf nicht dargestellte Gleitdichtungen, z. B. aus Polyamid, Anwendung finden.

Der Verschlußkörper 7 ist hohl und weist einen Druckluftanschlußstutzen 71 zum Anschluß eines Druckluftzuführungsschlauches und eine mit dem Druckluftanschlußstutzen in Verbindung stehende Druckluftdüse 72 in Form einer oder mehrerer axial in den betreffenden Schleusenradabschnitt ausmändender Öffnungen auf.

Wenn im Betrieb die Förderschnecken mit dem Doppelzellenrad 3 umlaufen, wird also die jeweils im Bereich der Druckluftdüse 72 befindliche Zellenradkammer mit Druckluft durchgeblasen, wobei die Druckluft das bereits in axialer Bewegung befindliche Schüttgut fluidisiert, weiter axial beschleunigt und nach radialer Umlenkung durch den Leitkörper 37 durch den betreffenden Schleusenauslaß 35 in den Auslaßstutzen 36 und die daran angeschlossene Druckluftförderleitung ausgeblasen.

Die jeweils ausgeblasene Zellenradkammer kommt, nachdem sie sich aus dem Bereich der Druckluftdüse 72 herausgedreht hat, mit einer ebenfalls im Gehäuse 33 gebildeten, jedoch bezüglich des Auslaßstutzens 36 umfangsversetzten Restluftausblasebohrung 38 (Fig. 8) zur Deckung, durch welche der noch in der betreffenden Zellenradkammer befindliche Luftüberdruck entweicht, bevor sich diese Kammer mit ihrer Stirnseite wieder aus dem vom Verschlußkörper 7 abgedeckten Bereich herausdreht, um weiteres Schüttgut aufzunehmen. Die durch die Restluftausblasebohrungen 38 etwa nach oben ausgeblasene Restluft verhindert, daß über dem Gehäuse 33 ein Schüttgutkegel stehenbleibt. Diese Restluft bewirkt eine gewisse Vorfluidisierung des Schüttguts und bläst dieses von der Gehäuseoberseite weg, so daß es in den Bereich der Förderschnecken gelangt.

Die entgegen der durch einen Pfeil angedeutete Drehrichtung weisende Kante 73 des Verschlußkörpers 7 weist einen kleinen Keilwinkel auf und ist angeschärft, um nicht vollständig in die Zellenradkammern eingetretene Schüttgutteilchen ablenken oder mit nur geringem Energieaufwand glatt abschneiden zu können, damit keine Schüttgutkörner stirnseitig zwischen Zellenrad und Verschlußkörper eindringen und die Stirnflächen beschädigen oder sich daran festfressen können. In gleicher Weise sind die entsprechenden Kanten von Rohrmantel 30 und Gehäuse 33 im Bereich der Auslaßöffnungen 35 angeschärft.

Fig. 5 zeigt in Stirnansicht die Ausbildung des Verschlußkörpers 7 mit dem Abdeckring 74 und den umfangsmäßigen Versatz zwischen dem Auslaßstutzen 36 und den Restluftausblasebohrungen 38 sowie den durch den schneckengangförmigen Verlauf der Zellenradkammern bedingten umfangsmäßigen Versatz zwischen der Druckluftdüse 72 und dem Schleusenauslaß 35 jedes Zellenradabschnitts.

Die Fig. 6, 7 und 8 zeigen drei verschiedene Möglichkeiten der Ausbildung der Förderschnecken 1 und 2 derart, daß diese über ihre ganze Schneckenlänge im wesentlichen gleichmäßig Material aufnehmen.

Gemäß Fig. 6 nimmt die Steigung der Förderschnecke von ihrem von der Zellenradschleuse entfernten Ende zur Zellenradschleuse hin zu, d. h. der Förderquerschnitt vergrößert sich zunehmend zum Zellenrad hin. Mit zunehmender Schneckensteigung kann zweckmäßigerweise auch die Anzahl der Schneckengänge zunehmen, um eine gute Förderung zu gewährleisten. In Fig. 6 ist ein Schneckengang 11 und im Bereich größerer Steigung ein zweiter Schneckengang 12 dargestellt. Selbstverständlich ist es möglich, ausgehend von einem Schneckengang mit größer werdender Schneckensteigung zunächst auf zwei Schneckengänge und sodann auf vier Schneckengänge überzugehen oder jede andere geeignete Konfiguration vorzusehen.

Bei der Ausführungsform nach Fig. 7 erweitert sich der Förderquerschnitt dadurch, daß die Schneckenwelle 4 sich konisch verjüngt.

Die Ausführungsform nach Fig. 8 entspricht grundsätzlich derjenigen nach Fig. 7, wobei sich die Schneckenwelle 4 zum Zellenrad hin anstatt konisch, wie in Fig. 7, nunmehr stufenweise verjüngt.

Selbstverständlich lassen sich die Maßnahmen nach den Fig. 7 und 8 auch den Maßnahmen nach Fig. 6 je nach Bedarf kombinieren.

Als Antriebsmotor für die Welle 4 wird vorzugsweise ein Hydraulikmotor verwendet, der sich in der hohlen Schneckenwelle unterbringen läßt. Ein solcher Motor 8 ist in Fig. 1 schematisch angedeutet. Dies hat den Vorteil, daß sich die Förderschnecken beiderseits der Doppelzellenradschleuse über die ganze Länge der Hinterbordwand, also bis unmittelbar an die Seitenbordwand, erstrecken können, ohne daß dann der Antriebsmotor seitlich übersteht. Für die Zugänglichkeit des Motors 8 ist dann lediglich ein stirnseitiger abnehmbarer Deckel 9 erforderlich.

## Patentansprüche

1. Pneumatische Schüttgut-Entladevorrichtung mit Zellenradschleuse, insbesondere für Kippfahrzeuge, mit

a) einem in einem zylindrischen Gehäuse (33) umlaufenden Zellenrad (3) und einer damit koaxial auf einer gemeinsamen Welle angeordneten Förderschnecke (1, 2),

b) einem jeweils einen Sektor der schneckenseitigen Stirnseite des Zellenrads (3) abdichtenden, etwa halbkreisförmigen Verschlußkörper (7), und

c) einem in eine Druckluftförderleitung ausmündenden Schleusenauslaß (35), dadurch gekennzeichnet, daß

d) die Kammerwände (34) des Zellenrads (3) ihrerseits als Schneckengänge ausgebildet sind,

e) der Verschlußkörper (7) einen Druckluftanschluß (71) und mindestens eine axial in das Zellenrad (3) ausblasende Druckluftdüse (72) aufweist, und

f) die entgegen der Drehrichtung weisende Verschlußkörperkante (73) messerartig ausgebildet ist.

2. Entladevorrichtung nach Anspruch 1, dadurch gekennzeichnet, daß der Schleusenauslaß (35) bezüglich der Zellenradachse etwa radial in die Druckluftförderleitung ausmündet und das Zellenrad (3) an seinem von der Förderschnecke (1, 2) abgewandten Stirnende einen den Förderstrom radial zum Schleusenauslaß umlenkenden Leitkörper (37) aufweist.

3. Entladevorrichtung nach Anspruch 1 oder 2, dadurch gekennzeichnet, daß die Zellenradschleuse eine in Drehrichtung bezüglich des Schleusenauslasses (35) versetzte, nach oben aus dem Gehäuse (33) ausmündende Restluftausblaseöffnung (38) aufweist, mit welcher die Zellen jeweils nach Trennung von Druckluftdüse (72) und Schleusenauslaß (35) in Verbindung kommen, solange sie noch vom Verschlußkörper (7) abgedichtet sind.

4. Entladevorrichtung nach einem der Ansprüche 1 bis 3, dadurch gekennzeichnet, daß die Steigung der Förderschnecke (1, 2) in Richtung zum Zellenrad (3) zunimmt.

5. Entladevorrichtung nach Anspruch 4, dadurch gekennzeichnet, daß die Anzahl der Schneckengänge (11, 12) mit größer werdender Schneckensteigung zunimmt.

6. Entladevorrichtung nach einem der Ansprüche 1 bis 5, dadurch gekennzeichnet, daß sich die Schneckenwelle (4) zum Zellenrad (3) hin konisch oder stufenweise verjüngt.

7. Entladevorrichtung nach einem der Ansprüche 1 bis 6, dadurch gekennzeichnet, daß die Schnecke (1, 2) über ihre ganze Länge von einem Halbrohr (39) teilweise umschlossen ist.

8. Entladevorrichtung nach einem der Ansprüche 1 bis 7, dadurch gekennzeichnet, daß der die Schnecke (1, 2) mit dem Zellenrad (3) antreibende Motor (8) in der hohlen Schneckenwelle untergebracht ist.

9. Entladevorrichtung nach einem der Ansprüche 1 bis 8, dadurch gekennzeichnet, daß der Leitkörper (37) eine konkave Rotationsfläche aufweist.

10. Entladevorrichtung nach einem der Ansprüche 1 bis 9, dadurch gekennzeichnet, daß das Zellenrad (3) von einem damit zusammen umlaufenden Rohrmantel (30) umschlossen ist.

11. Entladevorrichtung nach Anspruch 10, dadurch gekennzeichnet, daß der Verschlußkörper (7) einteilig mit einem feststehenden Abdeckring (74) ausgebildet ist, welcher die schneckenseitige Stirnseite des Gehäuses (33) und des Rohrmantels (30) abdeckt.

12. Entladevorrichtung nach einem der Ansprüche 2 bis 11, gekennzeichnet durch eine Ausbildung als Doppelanordnung mit einer zwischen einer linkstgängigen u. einer rechtsgängigen Förderschnecke (1, 2) angeordneten Doppelzellenradschleuse (3, 33), wobei die den beiden axial nebeneinander angeordneten Einzelzellenradabschnitten (31, 32) zugeordneten Einzelauslässe (35) sich zu einem gemeinsamen Schleusenauslaß (36) vereinigen.

13. Entladevorrichtung nach einem der Ansprüche 1 bis 12, dadurch gekennzeichnet, daß dieselbe als Bestandteil einer austauschbaren Kipplastwagen-Hinterbordwand (5) ausgebildet ist.

14. Verwendung einer Entladevorrichtung nach einem der Ansprüche 1 bis 12 als im Kielbereich anzuordnende Schiffsentladevorrichtung, dadurch gekennzeichnet, daß dieselbe gleichzeitig als Lenzpumpe dient.

**Claims**

1. Pneumatic bulk-material unloading device with a bucket wheel gate, in particular for tipper vehicles, with

a) a bucket wheel (3) rotating in a cylindrical housing (33) and a screw conveyor (1, 2) arranged coaxially with the bucket wheel (3) on a common shaft,

b) an approximately semi-circular closure body (7) which in each case seals a sector of the screw-side end face of the bucket wheel (3), and

c) a gate outlet (35) leading into a compressedair delivery line,
characterized in that

d) the chamber walls (34) of the bucket wheel (3) are in turn made as spirals,

e) the closure body (7) has a compressed-air connection (71) and at least one compressed-air nozzle (72) blowing out axially into the bucket wheel (3), and

f) the closure body edge (73) pointing in the opposite direction to the direction of rotation is made like a blade.

2. Unloading device according to Claim 1, characterized in that the gate outlet (35), relative to the bucket wheel axis, leads approximately radially into the compressed-air delivery line, and the bucket wheel (3), at its end face remote from the screw conveyor (1, 2), has a baffle body (37) which deflects the delivery flow radially to the gate outlet.

3. Unloading device according to Claim 1 or 2, characterized in that the bucket wheel gate has a residualair blow-out opening (38) which, relative to the gate outlet (35), is offset in the direction of rotation and leads upwards out of the housing (33), with which residualair blow-out opening (38) the buckets come into connection in each case after separation of the compressed-air nozzle (72) and the gate outlet (35) as long as they are still sealed by the closure body (7).

4. Unloading device according to one of Claims 1 to 3, characterized in that the pitch of the screw conveyor (1, 2) increases in the direction of the bucket wheel (3).

5. Unloading device according to Claim 4, characterized in that the number of spirals (11, 12) increases as the screw pitch increases.

6. Unloading device according to one of Claims 1 to 5, characterized in that the screw shaft (4) narrows in tapered manner or in steps towards the bucket wheel (3).

7. Unloading device according to one of Claims 1 to 6, characterized in that the screw (1, 2) is partly enclosed over its entire length by a half-section tube (39).

8. Unloading device according to one of Claims 1 to 7, characterized in that the motor (8) driving the screw (1, 2) together with the bucket wheel (3) is accommodated in the hollow screw shaft.

9. Unloading device according to one of Claims 1 to 8, characterized in that the baffle body (37) has a concave surface of rotation.

10. Unloading device according to one of Claims 1 to 9, characterized in that the bucket wheel (3) is enclosed by a tube jacket (30) rotating together with it.

11. Unloading device according to Claim 10, characterized in that the closure body (7) is made in one piece with a stationary cover ring (74) which covers the screwside end face of the housing (33) and the tube jacket (30).

12. Unloading device according to one of Claims 2 to 11, characterized by a design as a double arrangement with a double bucket-wheel gate (3, 33) arranged between a left-hand and a right-hand screw conveyor (1, 2), with the individual outlets (35) which are allocated to the two individual bucket-wheel sections (31, 32) arranged axially next to one another being combined into a common gate outlet (36).

13. Unloading device according to one of Claims 1 to 12, characterized in that the same is designed as a component part of an interchangeable tailboard (5) of a tipper lorry.

14. The application of an unloading device according to one of Claims 1 to 12 as a ship's unloading device to be arranged in the keel area characterized in that the unloading device is at the same time used as a bilge pump.

**Revendications**

1. Dispositif pneumatique de déchargement pour matières en vrac, notamment pour véhicules basculants, avec sas à roue cellulaire, comprenant

a) une roue cellulaire (3) tournant dans un carter cylindrique (33), et une vis transporteuse (1, 2) disposée de façon coaxiale avec la roue cellulaire sur un arbre commun.

b) un corps de fermeture (7) a peu près semi-circulaire obturant un secteur de la face frontale de la roue cellulaire (3) côté vis, et

c) une sortie de sas (35) débouchant dans un conduit transporteur à air comprimé, caractérisé en ce que

d) les cloisons de chambre (34) de la roue cellulaire (3) ont elles-mêmes la forme de spires de vis.

e) le corps de fermeture (7) présente un raccord pour air comprimé (71) et au moins une tuyère d'air comprimé (72) débouchant de façon axiale dans la roue cellulaire (3), et

f) le bord (73) du corps de fermeture, disposé dans le sens contraire de la rotation, à la forme d'une lame.

2. Dispositif de déchargement selon la revendication 1, caractérisé en ce que la sortie de sas (35) débouche dans le conduit transporteur à air comprimé de façon à peu près radiale par rapport à l'axe de la roue cellulaire et en ce que la roue cellulaire (3) présente, à son extrémité frontale opposée à la vis transporteuse (1, 2), un corps de guidage (37) détournant de façon radiale le flux de transport vers la sortie de sas.

3. Dispositif de déchargement selon la revendication 1 ou 2, caractérisé en ce que le sas à roue cellulaire présente un orifice de sortie d'air résiduel (38) qui est décalé par rapport à la sortie de sas (35) dans le sens de la rotation, qui débouche du carter (33) vers le haut, et avec lequel les cellules sont mises en communication tour à tour, après séparation de la tuyère d'air comprimé (72) et de la sortie de sas (35), pendant qu'elles sont encore obturées par le corps de fermeture (7).

4. Dispositif de déchargement selon l'une quelconque des revendications 1 à 3, caractérisé en ce que le pas de la vis transporteuse (1, 2) augmente en direction de la roue cellulaire (3).

5. Dispositif de déchargement selon la revendication 4, caractérisé en ce que le nombre de spires (11, 12) de la vis croît avec l'augmentation du pas de vis.

6. Dispositif de déchargement selon l'une quelconque des revendications 1 à 5, caractérisé en ce que le diamètre de l'arbre (4) de la vis diminue de façon conique ou par paliers en direction de la roue cellulaire (3).

7. Dispositif de déchargement selon l'une quelconque des revendications 1 à 6, caractérisé en ce que la vis (1, 2) est entourée en partie sur toute sa longueur par un demi-tuyau (39).

8. Dispositif de déchargement selon l'une quelconque des revendications 1 à 7, caractérisé en ce que le moteur (8) entrainant la vis (1, 2) avec la roue cellulaire (3) est monté dans l'arbre creux de la vis.

9. Dispositif de déchargement selon l'une quelconque des revendications 1 à 8, caractérisé en ce que le corps de guidage (37) présente une surface de rotation concave.

10. Dispositif de déchargement selon l'une quelconque des revendications 1 à 9, caractérisé en ce que la roue cellulaire (3) est entourée d'une enveloppe tubulaire (30) qui tourne avec la roue.

11. Dispositif de déchargement selon la revendication 10, caractérisé en ce que le corps de fermeture (7) est réalisé d'une seule pièce avec une bague de recouvrement (74) qui recouvre la face frontale, côté vis, du carter (33) et de l'enveloppe tubulaire (30).

12. Dispositif de déchargement selon l'une quelconque des revendications 2 à 11, caractérisé en ce qu'il est conçu en exécution doublée avec un sas à double roue cellulaire (3, 33) disposé entre une vis transporteuse à pas gauche et une vis transporteuse à pas droit (1, 2), les sorties individuelles (35), associées aux deux parties de roue cellulaire simple (31, 32) disposées l'une à côté de l'autre de façon axiale, se réunissant en une sortie de sas commune (36).

13. Dispositif de déchargement selon l'une quelconque des revendications 1 à 12, caractérisé en ce que le dispositif fait partie intégrante d'un hayon arrière échangeable (5) de la benne basculante d'un camion.

14. Utilisation d'un dispositif de déchargement selon l'une quelconque des revendications 1 à 12 comme dispositif de déchargement de navire à disposer dans la zone de la carene, caractérisé en ce que ledit dispositif sert en même temps de pompe de cale.

**FIG. 1**

**FIG. 2**

**FIG. 3**

0 122 621

FIG. 4

0 122 621

FIG. 5

FIG. 6

FIG. 7

FIG. 8